# EUROPEAN PATENT APPLICATION

(11) **EP 4 738 541 A1**
(43) Date of publication of application: **06.05.2026**
(21) Application number: 24894753.3
(22) Date of filing: 13.11.2024
(51) Int. Cl.: H01M 10/6551, H01M 50/211, H01M 10/625

(54) **BATTERY MODULE, BATTERY PACK AND VEHICLE INCLUDING SAME**

(30) Priority: 21.11.2023 KR 20230162568
(71) Applicant: LG Energy Solution, Ltd., Seoul 07335 (KR)
(72) Inventor: KIM, Jee-Won, Daejeon 34122 (KR); SHIN, Jae-Wook, Daejeon 34122 (KR)
(74) Representative: Plasseraud IP
(86) International application number: PCT/KR2024/096553
(87) International publication number: WO 2025/110863

(57) **Abstract**

The present disclosure relates to a battery module including: a cell stack including a plurality of battery cells; a module case configured to accommodate the cell stack; and a thermally conductive layer provided between the module case and the cell stack and configured so that bonding strength varies from the outside to the inside.

## Description

### TECHNICAL FIELD

The present disclosure relates to a battery module, and a battery pack and a vehicle including the same.

This application is based on and claims priority from Korean Patent Application No. 10-2023-0162568, filed on November 21, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity.

When configuring a battery pack by connecting multiple battery cells in series/parallel, it is common to preferentially configure a battery module including one or more battery cells and then add other components using at least one battery module to configure a battery pack or battery rack. Alternatively, recently, a battery pack has been manufactured in a cell-to-pack type in which multiple battery cells are directly stored in a pack housing or the like, instead of modularizing the same.

Meanwhile, in a conventional battery module, a thermally conductive adhesive may be applied to one side of a cell stack, which are obtained by stacking these battery cells, to cool the battery cells. The conventional battery module may have various problems caused by swelling of the battery cells during the charge/discharge cycle.

For example, when swelling occurs in the battery cells, all the battery cells of the cell stack move to the outermost part, whereas one side of the cell stack that is in direct contact with the thermally conductive adhesive is fixed by the thermally conductive adhesive cured. As a result, a problem may occur in which a part of the cell case with relatively low elongation is damaged.

Alternatively, when swelling occurs in the battery cells, the thermally conductive adhesive cured may be damaged as the cell stack moves, causing partial or entire structural collapse of the cell stack or battery device. In addition, during this process, the battery cell may be separated from the thermally conductive adhesive, thereby degrading the heat dissipation performance of the battery cell.

### DISCLOSURE

### Technical Problem

The present disclosure is designed to solve the problems of the related art, and therefore the present disclosure is directed to providing a battery module with an improved structure capable of securing stability even when swelling occurs, and a battery pack and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell stack including a plurality of battery cells; a module case configured to accommodate the cell stack; and a thermally conductive layer provided between the module case and the cell stack and configured so that bonding strength varies from an outside to an inside.

The thermally conductive layer may be configured so that the bonding strength is reduced from the outside to the inside.

The thermally conductive layer may include a first thermally conductive layer configured to be in contact with the module case, and a second thermally conductive layer provided further inward than the first thermally conductive layer so as to be in contact with the cell stack.

The first thermally conductive layer and the second thermally conductive layer may be configured to be different in bonding strength.

The bonding strength of the second thermally conductive layer may be configured to be lower than the bonding strength of the first thermally conductive layer.

The second thermally conductive layer may be formed of a material having a lower degree of hardening than the first thermally conductive layer.

The second thermally conductive layer may be formed of a material including silicon.

The second thermally conductive layer may be configured to surround ends of the battery cells.

The second thermally conductive layer may be configured to be inserted between the plurality of battery cells when swelling of the battery cell occurs.

The first thermally conductive layer may be configured to be in contact with the ends of the battery cells.

The first thermally conductive layer may be configured to surround the ends of the battery cell.

The thermally conductive layer may be configured to include a portion in which the thickness of the second thermally conductive layer varies as it gets closer to an outermost portion in a stacking direction of the battery cells.

In another aspect of the present disclosure, there is provided a battery pack including a battery module according to the present disclosure.

In another aspect of the present disclosure, there is provided a vehicle including a battery module according to the present disclosure.

### Advantageous Effects

According to an implemented configuration of the present disclosure, stability against swelling of a battery device including battery cells, i.e., a battery module or a battery pack, is able to be secured.

In particular, according to an implemented configuration of the present disclosure, in a battery module or a battery pack including a stack of multiple battery cells, the cell stacking state is able to be stably maintained in a normal state. In addition, it is possible to prevent damage to components of the battery module, such as the battery cells, when the swelling occurs.

In addition, according to an implemented configuration of the present disclosure, it is possible to prevent or suppress collapse of the structure of the battery device due to damage to a curable adhesive when the swelling occurs.

In addition, according to an implemented configuration of the present disclosure, it is possible to prevent the battery cell from being separated from a thermally conductive adhesive due to swelling, which causes deterioration of a heat dissipation function. Therefore, the cooling performance of the battery device is able to be consistently maintained.

Therefore, according to these aspects of the present disclosure, the cycle performance of the battery device is able to be improved. That is, according to various aspects of the present disclosure, a battery device with improved lifespan, which can be stably used for a long period of time, may be provided.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which shows, for example, a cross-section taken along line I - I' in FIG. 1.
FIG. 4 is a cross-sectional view of a battery module when a battery cell is swollen according to an embodiment of the present disclosure.
FIG. 5 is a cross-sectional view of a battery module according to another embodiment of the present disclosure.
FIG. 6 is a drawing illustrating an example of a thermally conductive layer included in a battery module according to another embodiment of the present disclosure.
FIG. 7 is an enlarged view of part A in FIG. 5.
FIG. 8 is an enlarged view of part A in FIG. 5 when a battery cell is swollen in a battery module according to another embodiment of the present disclosure.
FIG. 9 is an enlarged cross-sectional view of a battery module according to another embodiment of the present disclosure.
FIG. 10 is an enlarged cross-sectional view of a battery module according to another embodiment of the present disclosure.
FIG. 11 is a cross-sectional view of a battery module according to another embodiment of the present disclosure.
FIG. 12 is an enlarged view of part B in FIG. 11.
FIG. 13 is a cross-sectional view of a battery module according to another embodiment of the present disclosure.
FIG. 14 is a cross-sectional view of a battery module according to another embodiment of the present disclosure.
FIG. 15 is a perspective view schematically illustrating the configuration of a battery pack according to an embodiment of the present disclosure.
FIG. 16 is a schematically perspective view of a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back directions are used in this specification, it is obvious to those skilled in the art to which the present disclosure pertains that these terms are only for convenience of explanation with reference the relevant drawings and may vary depending on the position, arrangement, or rotation of the target object or the position of the observer.

For example, in the embodiment of the present disclosure, the X-axis direction shown in the drawing may indicate a left-right direction, the Y-axis direction may indicate a front-back direction, i.e., a longitudinal direction of a battery cell, perpendicular to the X-axis direction on the horizontal plane (X-Y plane), and the Z-axis direction may indicate the up-down direction (vertical direction), i.e., a height direction of a battery cell, perpendicular to both the X-axis direction and the Y-axis direction.

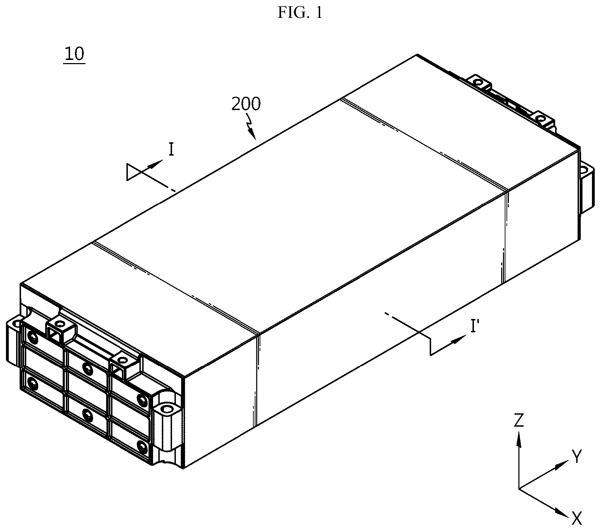

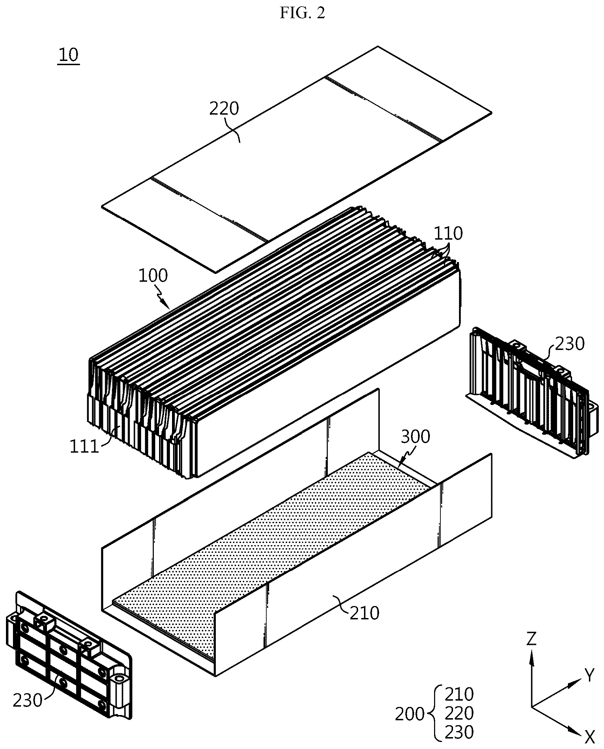

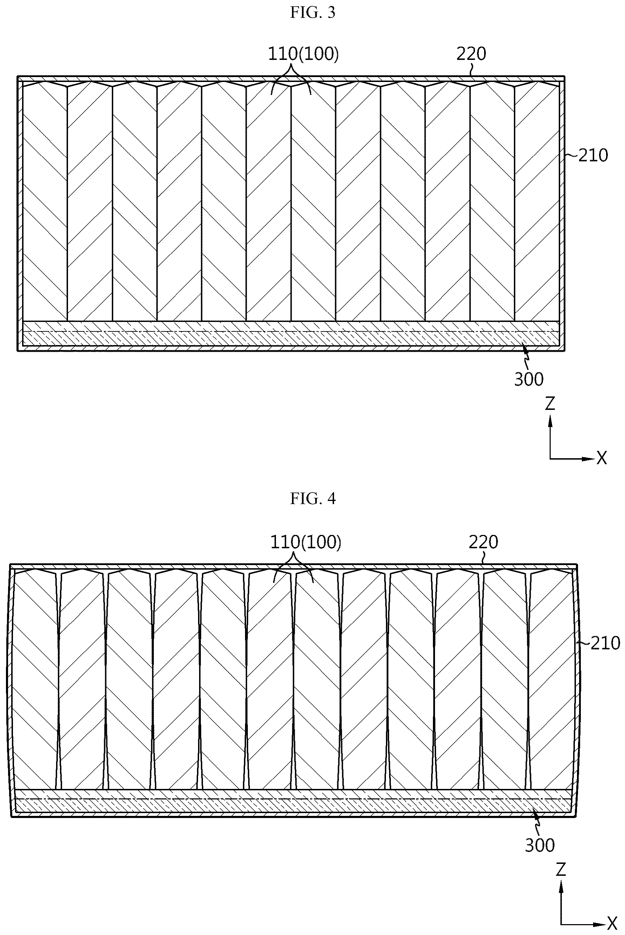

FIG. 1 is a perspective view of a battery module according to an embodiment of the present disclosure, FIG. 2 is an exploded perspective view of a battery module according to an embodiment of the present disclosure, and FIG. 3 is a cross-sectional view of a battery module according to an embodiment of the present disclosure. In addition, FIG. 4 is a cross-sectional view of a battery module when a battery cell is swollen according to an embodiment of the present disclosure. For example, FIGS. 3 and 4 may be diagrams illustrating a cross-section taken along line I - I' in FIG. 1.

Referring to FIGS. 1 to 4, a battery module 10 according to the present disclosure includes a cell stack 100, a module case 200, and a thermally conductive layer 300.

The cell stack 100 may include one or more battery cells 110, in particular, multiple battery cells 110. Here, each battery cell 110 may indicate one secondary battery or a group of multiple secondary batteries. In this specification, the description will be made on the assumption that the battery cell 110 indicates one secondary battery.

The plurality of battery cells 100 may include an electrode assembly, a cell case that accommodates the electrode assembly, and an electrode lead 111 that is connected to the electrode assembly and extends outside the cell case, thereby functioning as an electrode terminal. In this case, the battery case may be configured in various shapes, and the battery cells 110 may be classified into a pouch-type cell, a cylindrical cell, a prismatic cell depending on the shape of the battery case. Since the types of these battery cells 110 are well known at the time of filing the present disclosure, a detailed description thereof will be omitted. The present disclosure may be applied to all types of secondary batteries known at the time of filing the present disclosure, and is not limited to a specific type of secondary battery.

In the cell stack 100, the multiple battery cells 110 may be configured to be stacked in at least one direction. For example, the multiple battery cells 110 may be stacked so as to be arranged in parallel in a horizontal direction, in particular, in the left-right direction (X-axis direction), as shown in FIG. 2. In addition, the multiple battery cells 110 provided in the cell stack 100 may be electrically connected to each other in series and/or in parallel through a bus-bar (not shown) or the like.

Although not shown in the drawing, the cell stack 100 may further include a barrier in addition to the battery cell 110. One or more barriers, in particular, multiple barriers may be provided in each cell stack 100. Furthermore, the barriers may be disposed between adjacent battery cells 110 in the cell stack 100 or disposed at the outermost sides of the cell stack 100 in the stacking direction. The barrier may be configured in a plate, and may face the surface of the battery cell 110, in particular, the outer surface of a storage portion of the pouch-type cell.

Meanwhile, referring to FIG. 2, the module case 200 may be configured to accommodate the cell stack 100. Specifically, the module case 200 may have an accommodation space formed therein, and the cell stack 100 may be accommodated in the accommodation space.

For example, the module case 200 may have a case body 210, a top plate 220, and an end plate 230 to confine the accommodation space. In addition, the cell stack 100 may be positioned in the confined accommodation space. The module case 200 may be made at least partially of metal and/or plastic materials.

At least some of the various plate members constituting the module case 200 may be configured in an integrated form. For example, as illustrated in FIG. 2, the module case 200 may have a case body 210 in the form of a U-frame in which the lower plate, the left plate, and the right plate are integrated with each other, and the top plate 220 and the end plate 230 may be configured to cover or seal the upper, front, and rear openings of the case body 210. In this case, the top plate 220, the end plate 230, and the case body 210 may be coupled by various fastening methods such as welding, bonding, bolting, and hooking. Alternatively, the module case 200 may be manufactured in the form of a mono-frame in which the top plate 220 and the case body 210 are integrated with each other. Alternatively, the module case 200 may be obtained by separately manufacturing the respective plates and then coupling the same by welding or the like. However, the present disclosure is not limited to a specific material or form of the module case 200.

The thermally conductive layer 300 may be provided between the cell stack 100 and the module case 200. For example, referring to FIG. 3, the thermally conductive layer 300 may be provided between one side of the cell stack 100, for example, the lower side, and the bottom surface of the module case 200.

In addition, the thermally conductive layer 300 may be configured to transfer heat between the cell stack 100 and the module case 200. The battery cell 110 may generate heat during use, and if this heat is not properly dissipated, the performance of the battery cell 110 is unable to be stably guaranteed, and in severe cases, it may lead to thermal runaway, ignition, or explosion of the battery cell. In this regard, the heat generated from the battery cell 110 needs to be properly dissipated to the outside through the module case 200. In this case, the thermally conductive layer 300 may ensure effective heat transfer between the battery cell 110 and the module case 200, thereby securing stable cooling performance of the battery module.

The thermally conductive layer 300 may have a material capable of transferring heat. In particular, the thermally conductive layer 300 may be made of a resin material, and in this case, the thermally conductive layer 300 may be referred to as a thermal resin. The thermally conductive layer 300 may include various materials, such as urethane, silicone, and epoxy. The thermally conductive layer 300 may be expressed as other terms, such as a TIM (Thermal Interface Material), potting resin, or the like, and various thermal resins or TIMs known at the time of filing the present disclosure may be used as a material of the thermally conductive layer 300 of the battery module 10 according to the present disclosure.

In addition, the thermally conductive layer 300 may be configured to bond the cell stack 100 to the module case 200. To this end, the thermally conductive layer 300 may include an adhesive component. For example, as shown in FIG. 3, when the thermally conductive layer 300 is provided at the bottom of the cell stack 100, the thermally conductive layer 300 may bond and fix the bottom side of the cell stack 100 to the bottom surface of the module case 200.

The thermally conductive layer 300 may be interposed between all of the battery cells 110 provided in the cell stack 100 and the module case 200. That is, the thermally conductive layer 300 may be configured to come into direct contact with all the battery cells 110 included in the cell stack 100. According to this implemented configuration of the present disclosure, heat dissipation may be performed through the thermally conductive layer 300 for all the battery cells 110 included in the battery module 10. Therefore, the overall cooling performance of the battery module 10 may be further improved.

In particular, in the battery module 10 according to the present disclosure, the thermally conductive layer 300 may be configured to bond at least a part of the cell stack 100 to the module case 200 with different bonding strengths. Here, the bonding strength may indicate a fixing force or fixing strength between the cell stack 100 and the module case 200 by the thermally conductive layer 300.

Specifically, the thermally conductive layer 300 may be configured to have a bonding strength that varies from the outside to the inside. That is, the thermally conductive layer 300 may be configured to have a bonding strength that varies in a direction orthogonal to one side of the module case 200. The bonding strength of the thermally conductive layer 300 may gradually vary from the outside to the inside, or a multilayer structure may be configured such that layers with different bonding strengths are provided.

Meanwhile, in this specification, the direction toward the center of the battery module 10 will be referred to as an inward direction, and the direction toward the outside of the battery module 10 will be referred to as an outward direction. The inward and outward directions may indicate relative directions.

As a more specific example, in the case where the thermally conductive layer 300 is interposed between the bottom of the cell stack 100 and the bottom surface of the module case 200 as shown in the embodiment in FIG. 3, the bonding strength of the thermally conductive layer 300 may be configured to vary in the vertical direction. In this case, the bonding strength between each of the battery cells 110 included in the cell stack 100 and the thermally conductive layer 300 may be configured to vary along the vertical direction.

If swelling occurs in the cell stack 100 having a plurality of battery cells 110 stacked, the battery cells 110 may move in the stacking direction, but since one side of the cell stack 100 is fixed while being in contact with the thermally conductive layer 300, the battery cells 110 may be damaged or broken. However, referring to FIG. 4, since the bonding strength of the thermally conductive layer 300 is configured to vary from the outside to the inside of the battery module 10 in the present disclosure, a certain level of freedom for movement of the battery cell 110 may be granted. Therefore, the damage to the battery cell 110 may be suppressed in the case of swelling. Therefore, the battery module 10 according to the present disclosure may secure stability or safety against swelling.

In particular, the thermally conductive layer 300 may be configured so that the bonding strength is at least partially reduced from the outside to the inside. That is, the inner portion of the thermally conductive layer 300 may be configured to have a lower bonding strength than the outer portion. For example, in the embodiment illustrated in FIG. 3, the thermally conductive layer 300 may be configured so that the bonding strength of the upper portion is lower than that of the lower portion.

Here, a lower bonding strength may include a relatively weak bonding strength, compared to other portions, and a bonding strength of zero in the case where there is no adhesion at all. For example, adhesion may be removed from the inner portion of the thermally conductive layer 300 in FIG. 3 by a relatively weak force, compared to the outer portion of the thermally conductive layer 300. Alternatively, the inner portion of the thermally conductive layer 300 may perform only the role of transferring heat without bonding the battery cells 110.

If the battery cell 110 is fixed with a higher bonding strength in a portion where the cell stack 100 and the thermally conductive layer 300 are in direct contact with each other, it is likely to break due to swelling. However, according to the above-implemented configuration, the bonding strength of the thermally conductive layer 300 is lower in the inner portion of the battery cell 110, the degree of freedom for movement of the battery cell 110 may be granted to a certain level. Therefore, when swelling occurs, the battery cell 110 may be protected from surrounding stress or impact. As a result, the stability or safety against swelling of the battery module 10 may be further secured.

Meanwhile, if the bonding strength of the thermally conductive layer 300 is lowered in the inner portion of the battery cell 110, the bonding strength with the module case 200 may be lowered. Therefore, according to the above-implemented configuration of the present disclosure, it is possible to secure a higher bonding strength of the thermally conductive layer 300 in the outer portion of the battery cell 110, thereby preventing damage to the battery cell 110 when swelling occurs, while maintaining the bonding strength with the module case 200 in the outer portion of the battery cell 110. In addition, according to the above-implemented configuration of the present disclosure, the cell stack 100 and the module case 200 may be reliably insulated from each other.

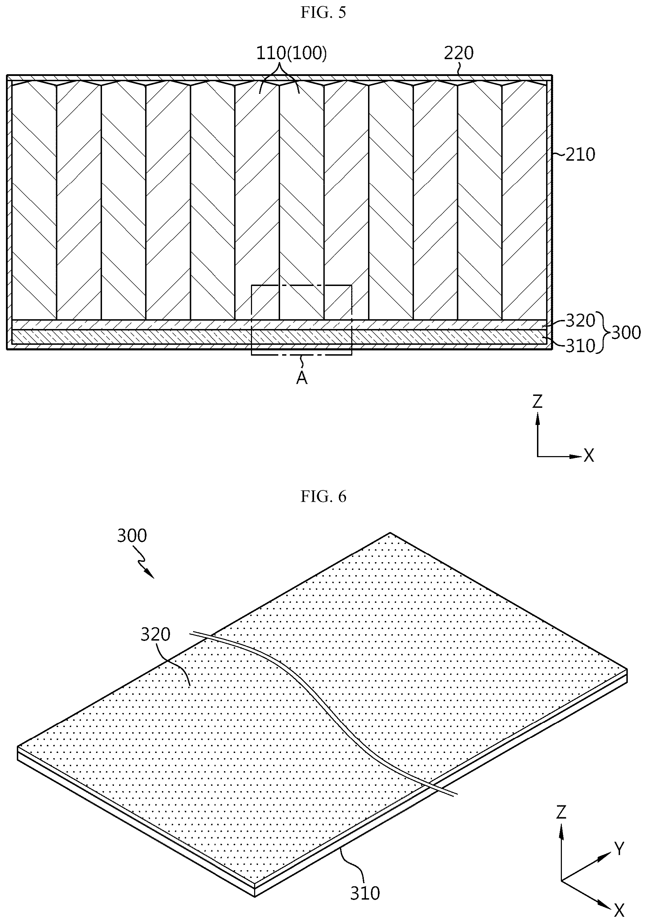

FIG. 5 is a cross-sectional view of a battery module according to another embodiment of the present disclosure, and FIG. 6 is a drawing illustrating an example of a thermally conductive layer included in a battery module according to another embodiment of the present disclosure.

Referring to FIG. 5 and FIG. 6, the thermally conductive layer 300 may include a first thermally conductive layer 310 and a second thermally conductive layer 320. Here, the first thermally conductive layer 310 and the second thermally conductive layer 320 are unit elements constituting the thermally conductive layer 300, and may be made of different types of materials from each other.

The first thermally conductive layer 310 and the second thermally conductive layer 320 may be disposed in a direction from the outside to the inside. Specifically, the first thermally conductive layer 310 may be configured to be in contact with the module case 200. The first thermally conductive layer 310 may indirectly or directly fix the cell stack 100 to the module case 200.

The second thermally conductive layer 320 may be provided on the inner side of the first thermally conductive layer 310. The second thermally conductive layer 320 may be configured to be in contact with the cell stack 100. Therefore, the second thermally conductive layer 320 may be interposed between the first thermally conductive layer 310 and the cell stack 100. That is, the module case 200, the first thermally conductive layer 310, the second thermally conductive layer 320, and the cell stack 100 are stacked in sequence from the outside to the inside.

In particular, the thermally conductive layer 300 disposed on one side of the cell stack 100 may be configured in the form of a plate. In this case, the heterogeneous unit layers constituting the thermally conductive layer 300, that is, two or more thermally conductive unit layers, may be configured in the form of a plate and disposed to face each other. For example, referring to the configurations illustrated in FIGS. 5 and 6, one first thermally conductive layer 310 and one second thermally conductive layer 320 may be configured as lying plates disposed in parallel in the vertical direction.

The first thermally conductive layer 310 and the second thermally conductive layer 320 may be configured to have different bonding strengths. In particular, the bonding strength of the second thermally conductive layer 320 may be configured to be lower than the bonding strength of the first thermally conductive layer 310. The second thermally conductive layer 320 may be configured to allow the battery cell 110 to move when swelling occurs.

According to the above-implemented configuration, the battery module 10 according to the present disclosure may be provided in a simple structure. In addition, according to the above-implemented configuration, the battery module 10 according to the present disclosure may be manufactured more easily. In particular, according to the above-implemented configuration, the damage to the battery cells 110 due to swelling may be more effectively prevented.

The thermally conductive layer 300 may be configured to have a partially different degree of hardening. The degree of hardening may indicate the degree of rigidity, and for example, a thermally conductive paste with a high degree of hardening may have a higher bonding strength (fixing strength) than a thermally conductive paste with a low degree of hardening under the same conditions, e.g., at room temperature. Since the technology for measuring or determining the degree of hardening is widely known at the time of filing the present disclosure, a detailed description thereof will be omitted.

In particular, the thermally conductive layer 300 may be configured such that the degree of hardening varies from the outside to the inside. For example, in the embodiments shown in FIGS. 5 and 6, the first thermally conductive layer 310 and the second thermally conductive layer 320 may be configured to have different degrees of hardening from each other.

In this configuration, the second thermally conductive layer 320 may be configured to have a lower degree of hardening than the first thermally conductive layer 310. That is, in a normal state after the battery module is manufactured, the first thermally conductive layer 310 may be harder than the second thermally conductive layer 320, thereby maintaining strong bonding with the module case 200. On the other hand, the second thermally conductive layer 320 may be provided to remain in a gel state, instead of being hardened into a solid state. Accordingly, the second thermally conductive layer 320 may be configured to remain in a softer state than the first thermally conductive layer 310, allowing the battery cell 110 to move to a certain extent.

According to the above-implemented configuration of the present disclosure, the battery cell 110 may be sufficiently moved when the cell stack 100 is swollen by configuring the portion of the thermally conductive layer 300 that comes into contact with the inner portion of the battery cell 110 to have a lower degree of hardening. Therefore, damage to the battery cell 110 may be maximally suppressed when swelling occurs.

In particular, the second thermally conductive layer 320 may be formed of a material including silicon. As a more specific example, the first thermally conductive layer 310 may be formed of a urethane-based thermal resin, and the second thermally conductive layer 320 may be formed of a gel-state silicon-based thermal resin.

Meanwhile, the fact that the thermally conductive layer 300 has a partially different degree of hardening may indicate that the thermally conductive layer 300 has a partially different property. Here, the different properties may include a solid state as a completely elastic body, a gel state, and a sol state. That is, the difference in the degree of hardening of the thermally conductive layer 300 may indicate a difference in elasticity, viscosity, fluidity, or the like. In particular, the thermally conductive layer 300 may have both a solid state portion and a gel state portion. For example, the first thermally conductive layer 310 may be made of a curable resin to be in a completely elastic state, and the second thermally conductive layer 320 may be made of an uncured resin to be in a gel state.

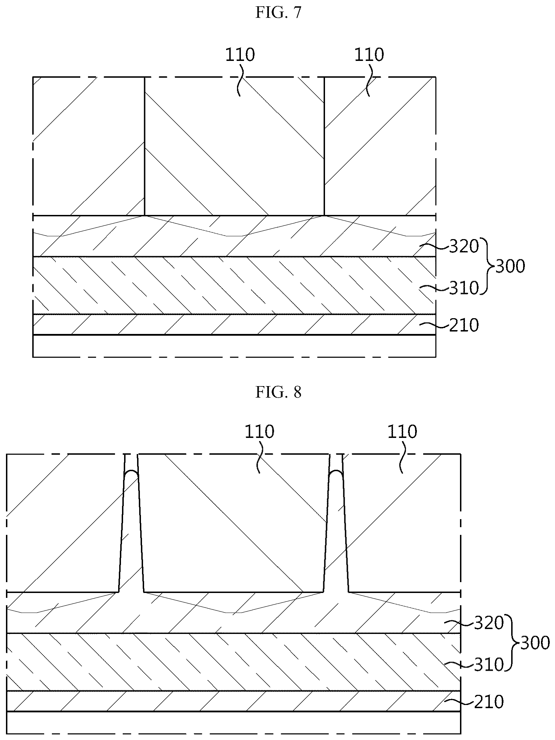

FIG. 7 is an enlarged view of part A in FIG. 5. In addition, FIG. 8 is an enlarged view of part A in FIG. 5 when a battery cell is swollen in a battery module according to another embodiment of the present disclosure.

Referring to FIG. 7, the second thermally conductive layer 320 may be configured to surround the ends of the battery cells 110. That is, the ends of the battery cell 110 may be configured to be surrounded by the second thermally conductive layer 320. All of the battery cells 110 included in the cell stack 100 may be configured to be inserted into the second thermally conductive layer 320. In the above embodiment, the cell stack 100 may not come into direct contact with the first thermally conductive layer 310. The cell stack 100 may come into contact only with the second thermally conductive layer 320 having a lower bonding strength, and the first thermally conductive layer 310 having a higher bonding strength may be disposed on the outer side of the second thermally conductive layer 320 so as to fix the second thermally conductive layer 320 to the module case 200. Accordingly, the cell stack 100 may be indirectly fixed to the module case 200 by the first thermally conductive layer 310.

In this case, the second thermally conductive layer 320 may be interposed between the ends of the battery cells 110. More specifically, the battery cell 110 may include a storage portion configured to receive an electrode assembly, and a sealing portion configured by the edges of the storage portion sealed. The sealing portion may be configured to be in contact with the second thermally conductive layer 320, and the second thermally conductive layer 320 may be interposed between the sealing portions of the battery cell 110.

In particular, as in the embodiment illustrated in FIG. 8, the second thermally conductive layer 320 may be configured to be inserted between a plurality of battery cells 110 when swelling of the battery cell 110 occurs. The second thermally conductive layer 320 may be interposed between the battery cells 110, particularly between the sealing portions, even when swelling of the battery cell 110 does not occur. Furthermore, when the battery cell 110 is swollen, the gap between the battery cells 110 increases, and a gap may also be formed between the storage portions. Accordingly, the second thermally conductive layer 320 may be interposed between the storage portions of the battery cells 110.

According to the above-implemented configuration of the present disclosure, the shape of the second thermally conductive layer 320 having a lower bonding strength and being movable may be deformed depending on whether swelling of the battery cell 110 occurs. In particular, in the case where the second thermally conductive layer 320 is inserted between the battery cells 110, the contact area between the battery cell 110 and the second thermally conductive layer 320 may be further increased. As a result, the cooling efficiency of the battery cell 110 may be further improved. In addition, the insulation performance between the battery cells 110 may be further improved.

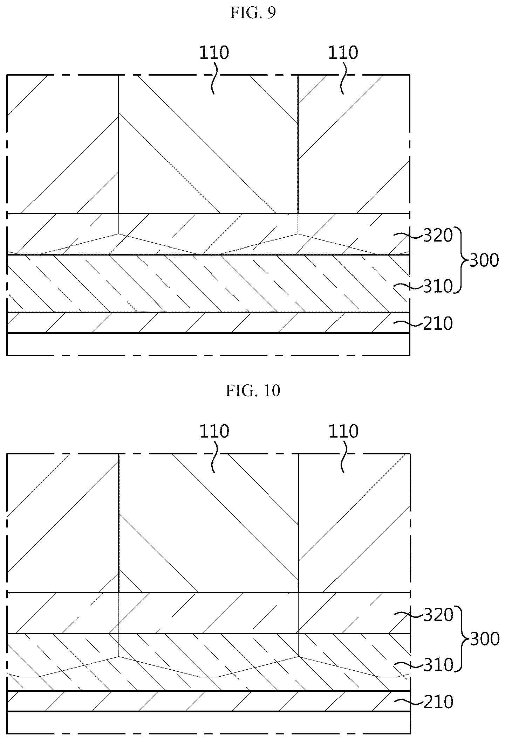

FIG. 9 is an enlarged cross-sectional view of a battery module according to another embodiment of the present disclosure. FIG. 9 may be an enlarged view of part A in FIG. 5.

Unlike the embodiment illustrated in FIG. 8, the first thermally conductive layer 310 may be configured to directly fix the cell stack 100 to the module case 200.

For example, as in the embodiment illustrated in FIG. 9, the first thermally conductive layer 310 may be configured to be in contact with the end of the cell stack 100. That is, the thermally conductive layer 300 may be disposed on one side of the cell stack 100 such that the ends of the battery cells 110 are in contact with the interface between the first thermally conductive layer 310 and the second thermally conductive layer 320.

According to the above-implemented configuration of the present disclosure, since the first thermally conductive layer 310 provides bonding strength to the cell stack 100 when the battery cell 110 swells, the overall structure of the cell stack 100 may be prevented from being totally collapsed by the impact such as vibration or the like. Accordingly, the structural rigidity and structural stability of the entire cell stack 100 may be improved while allowing a certain degree of movement of the cell stack 100.

FIG. 10 is an enlarged cross-sectional view of a battery module according to another embodiment of the present disclosure. FIG. 10 may be an enlarged view of part A in FIG. 5.

Alternatively, as in the embodiment illustrated in FIG. 10, the first thermally conductive layer 310 may be configured to surround the end of the battery cell 110. That is, the end of the battery cell 110 may be configured to be inserted into the first thermally conductive layer 310. Therefore, the end of the battery cell 110 may be configured to be surrounded by the first thermally conductive layer 310, as well as the second thermally conductive layer 320. In this case, the contact area between the battery cell 110 and the first thermally conductive layer 310 having a higher bonding strength may increase.

In the above-implemented configuration of the present disclosure, the contact area of the first thermally conductive layer 310 with all the battery cells 110 included in the cell stack 100 may be maximized. According to the above-implemented configuration of the present disclosure, since the bonding strength is able to be secured between the cell stack 100 and the module case 200, the overall structure of the cell stack 100 may be maintained even in the event of impact such as vibration. Therefore, the structural rigidity and structural stability of the entire cell stack 100 may be secured.

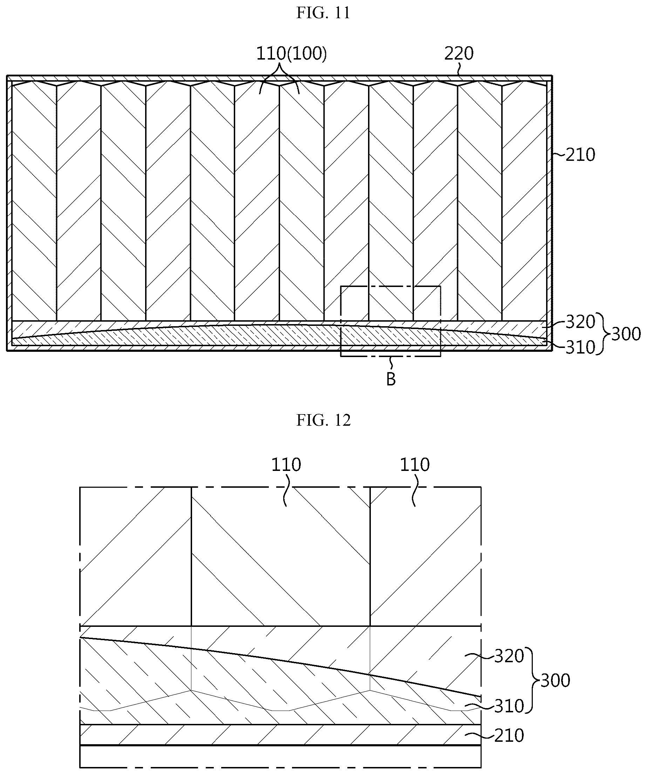

FIG. 11 is a cross-sectional view of a battery module according to another embodiment of the present disclosure, and FIG. 12 is an enlarged view of part B in FIG. 11.

Referring to FIG. 11 and FIG. 12, the thermally conductive layer 300 may be configured such that the bonding strength varies toward the outermost part along the stacking direction of the battery cells 110. That is, the bonding strength of the thermally conductive layer 300 may be configured to vary in the direction in which the battery cells 110 are stacked, as well as in the direction perpendicular to one side of the module case 200. In particular, the thermally conductive layer 300 may be configured such that the outer portion thereof, at least in part, has a lower bonding strength than the central portion in the direction in which the plurality of battery cells 110 are stacked in the cell stack 100.

Specifically, the thermally conductive layer 300 may be configured to include a portion in which the thickness of the second thermally conductive layer 320 is different. In this case, the thickness of the first thermally conductive layer 310 may also differ depending on the thickness of the second thermally conductive layer 320. The thicknesses of the first thermally conductive layer 310 and the second thermally conductive layer 320 may be constant or may be different from each other.

As a more specific example, in the embodiment illustrated in FIG. 11, the second thermally conductive layer 320 may be configured so that the central portion of the cell stack 100 is thinner than the outer portion of the cell stack 100. Therefore, the battery cell 110 located at the center of the cell stack 100 may be more strongly bonded, and the battery cell 110 located at the outer portion of the cell stack 100 may move more freely.

If multiple battery cells 110 are stacked in one direction, for example, in the left-right direction (X-axis direction), when the battery cells 110 swell, the battery cell 110 located at the outer portion may be pushed more than the battery cell 110 located at the center. Therefore, in the case where the battery cells 110 are fixed with the same bonding strength, the outer cell is more likely to be damaged due to swelling. However, in the case of the above-mentioned implemented configuration, since the bonding strength for the thermally conductive layer 300 is lower for the outer cell than for the inner cell, the degree of freedom for movement of the battery cells 110 may be granted to a certain level. Therefore, when swelling occurs, damage to the outer cell or collapse of the entire structure of the cell stack 100 may be suppressed.

Referring to FIGS. 11 and 12, the thermally conductive layer 300 may be configured to have a width that gradually changes in the stacking direction of the battery cell 110. In this case, the width of the second thermally conductive layer 320 may be configured to vary in the vertical direction at a portion where one battery cell 110 comes into contact with the thermally conductive layer 300. In particular, the first thermally conductive layer 310 may be formed in a convex shape from the left and right ends to the center. That is, the first thermally conductive layer 310 may be configured to have a width that gradually increases from the front and rear ends to the center, so that the center may be configured to be the thickest. The second thermally conductive layer 320 may be formed to have a width that is great at the left and right ends so as to correspond to the shape of the first thermally conductive layer 310. That is, the second thermally conductive layer 320 may be configured such that the width gradually decreases from the left and right ends to the center, so that the center may be configured to be the thinnest.

In this case, as illustrated in FIG. 12, at least some battery cells 110 may have a boundary line formed in a diagonal or curved shape between the first thermally conductive layer 310 and the second thermally conductive layer 320. In particular, the battery cell 110 included in the cell stack 100 may be configured such that the contact area of the second thermally conductive layer 320 with a lower bonding strength decreases and the contact area of the first thermally conductive layer 310 with a higher bonding strength increases as it gets closer to the center of the cell stack 100. In particular, the battery cell 110 located at the outermost part in the stacking direction of the battery cells 110 may be configured to have a large contact area with the second thermally conductive layer 320 so as to be movable, and the contact area of the second thermally conductive layer 320 may gradually increase as it gets closer to the outer side.

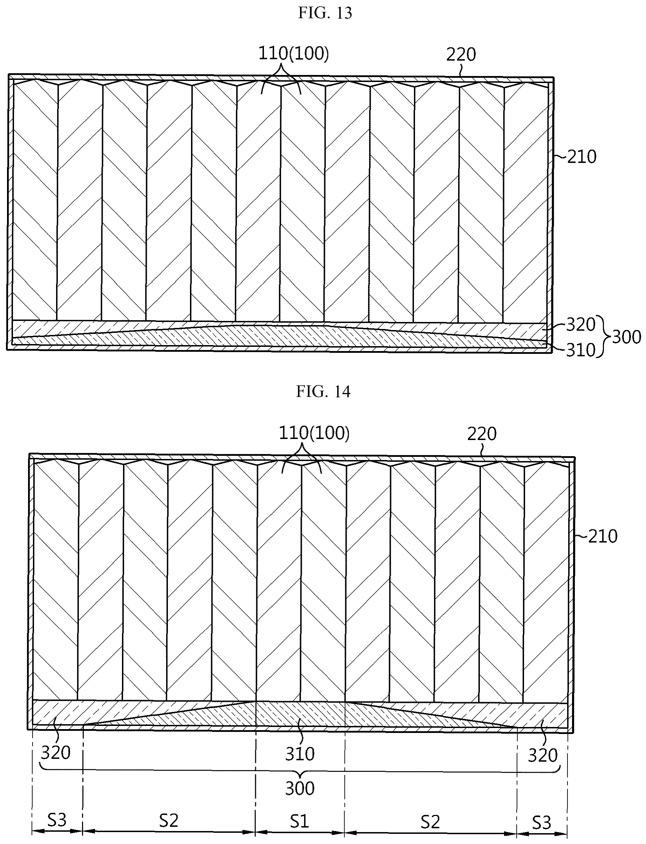

FIG. 13 is a cross-sectional view of a battery module according to another embodiment of the present disclosure.

Referring to FIG. 13, similarly to the embodiment shown in FIG. 11, the second thermally conductive layer 320 may be formed such that the outermost portion in the stacking direction of the battery cells 110 is thick, and the first thermally conductive layer 310 may be formed such that the central portion in the stacking direction of the battery cells 110 is thick. Furthermore, the thermally conductive layer 300 may include a portion in which the boundary line between the second thermally conductive layer 320 and the first thermally conductive layer 310 is formed in a diagonal shape.

According to the above-implemented configuration, the contact area between at least some of the battery cells 110 included in the cell stack 100 and the first thermally conductive layer 310 and/or the second thermally conductive layer 320 may vary at a constant ratio in the vertical direction. Therefore, the fixing force (bonding strength) between the multiple stacked battery cells 110 may change steadily and gradually.

FIG. 14 is a cross-sectional view of a battery module according to another embodiment of the present disclosure.

Referring to FIG. 14, all of the battery cells 110 included in the cell stack 100 may be brought into contact with a first unit member 310 having a high bonding strength. However, at least some battery cells 110 may be configured such that the contact area with the first unit member 310 differs from each other.

For example, as shown in the area indicated by S1, the battery cells 110 disposed in the central area in the cell stacking direction may be brought into contact only with the first thermally conductive layer 310. On the other hand, as shown in the area indicated by S3, the battery cells 110 disposed on the outer side in the cell stacking direction may be brought into contact only with the second thermally conductive layer 320. In particular, the outermost cell is included in the area S3, and the outermost cell is not in contact with the first thermally conductive layer 310 but is in contact with only the second thermally conductive layer 320 so as to movable.

In addition, as shown in the area indicated by S2, the second thermally conductive layer 320 may be configured such that the thickness increases as it gets closer to the outer portion along the cell stacking direction. Furthermore, in the area indicated by S2, the contact area between the battery cell 110 and the first thermally conductive layer 310 may gradually decrease and the contact area between the battery cell 110 and the second thermally conductive layer 320 may gradually increase as it gets closer to the outer portion in the cell stacking direction.

According to the above-implemented configuration of the present disclosure, since the first thermally conductive layer 310 provides bonding strength to the battery cells 110 disposed at the central area of the cell stack 100, the overall structure of the cell stack 100 may be maintained even in the event of vibration or swelling. As a result, the structural rigidity and structural stability of the entire cell stack 100 may be improved.

Furthermore, in the above-implemented configuration, the contact area of the second thermally conductive layer 320 with the outermost cell among all the battery cells 110 included in the cell stack 100 may be maximized. Therefore, since partial movement is allowed during swelling, the possibility of damage to the outermost cell due to swelling may be more reliably reduced.

In addition, as in the embodiment in FIGS. 11, 13, and 14, in the case where the boundary line between the first thermally conductive layer 310 and/or the second thermally conductive layer 320 is configured in a diagonal or curved shape, it is possible to more easily attain the configuration in which the bonding strength of the thermally conductive layer 300 gradually changes along the cell stacking direction. In particular, it may be difficult to sequentially change the composition of the thermally conductive layer 300 depending on the location or to arrange various types of thermally conductive materials with different compositions depending on the location in order to gradually change the bonding strength of the thermally conductive layer 300 depending on the location. However, according to the above-implemented configurations, a gradual change in bonding strength of the thermally conductive layer 300 depending on the location of the battery cell 110 may be easily implemented without performing a complex process.

Meanwhile, although the drawings of this specification illustrate that the thermally conductive layer 300 is positioned at the bottom of the battery module 10, the thermally conductive layer 300 may be located on another side of the battery module 10, for example, at the top thereof. In addition, the thermally conductive layer 300 may be provided on two or more sides of the battery module 10. For example, the thermally conductive layer 300 may be applied to the bottom and top of the cell stack 100, respectively.

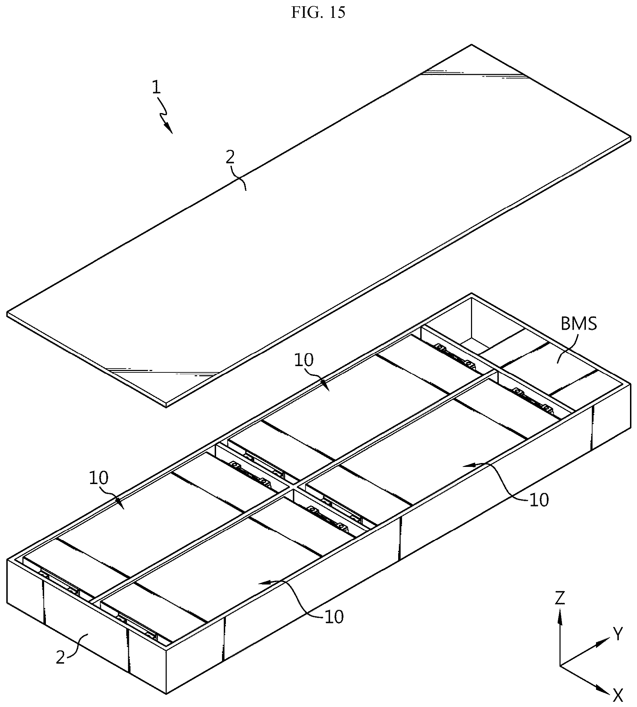

FIG. 15 is a perspective view schematically illustrating a battery pack including a battery module according to an embodiment of the present disclosure.

Referring to FIG. 15, a battery pack 1 according to an embodiment of the present disclosure may include one or more battery modules 10 according to an embodiment of the present disclosure described above. The battery pack 1 according to the present disclosure may further include a pack case 2 for accommodating a BMS (Battery Management System) for integrated control of charging and discharging of one or more battery modules, a current sensor, a fuse, and the components described above.

Alternatively, the battery pack 1 according to the present disclosure may include a battery module 10 according to the present disclosure and may be configured such that the module case 200 of the battery module 10 functions as a pack case 2, excluding the a pack case 2. In this case, the components of the battery pack, such as a BMS, a bus-bar, and a relay, may be included inside the module case 200. Such a battery pack is also called a cell-to-pack (CTP) type in which the battery cells 110 are directly stored in the pack case 2. These days, active development of the CTP-type battery pack is underway, and the present disclosure may also be applied to the CTP-type battery pack.

In particular, the thermally conductive layer 300 may provide partially different bonding strengths to the inner surface, i.e., the bottom surface, of the housing, which is the pack case 2 or the module case 200, so that stability against swelling may be secured. In addition, the plurality of battery cells 110 may directly transfer heat to the pack case (PC) through the thermally conductive layer 300, so that the cooling performance may be further improved.

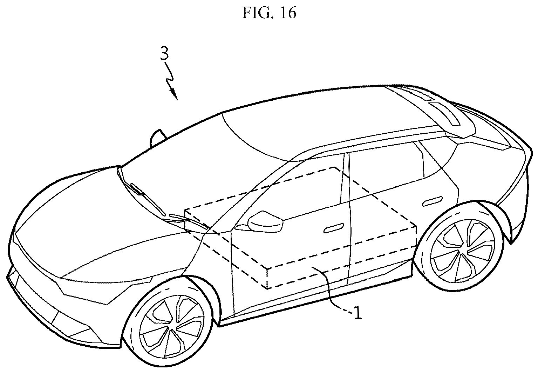

FIG. 16 is a schematically perspective view of a vehicle including a battery pack according to an embodiment of the present disclosure.

Referring to FIG. 16, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 operates by power supplied from the battery pack 1 or the battery module 10 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a cell stack comprising a plurality of battery cells;
a module case configured to accommodate the cell stack; and
a thermally conductive layer provided between the module case and the cell stack and configured so that bonding strength varies from an outside to an inside.

2. The battery module according to claim 1,
wherein the thermally conductive layer is configured so that the bonding strength is reduced from the outside to the inside.

3. The battery module according to claim 1,
wherein the thermally conductive layer comprises
a first thermally conductive layer configured to be in contact with the module case, and
a second thermally conductive layer provided further inward than the first thermally conductive layer so as to be in contact with the cell stack.

4. The battery module according to claim 3,
wherein the first thermally conductive layer and the second thermally conductive layer are configured to be different in bonding strength.

5. The battery module according to claim 3,
wherein a bonding strength of the second thermally conductive layer is configured to be lower than a bonding strength of the first thermally conductive layer.

6. The battery module according to claim 3,
wherein the second thermally conductive layer is formed of a material having a lower degree of hardening than the first thermally conductive layer.

7. The battery module according to claim 3,
wherein the second thermally conductive layer is formed of a material comprising silicon.

8. The battery module according to claim 3,
wherein the second thermally conductive layer is configured to surround ends of the battery cells.

9. The battery module according to claim 8,
wherein the second thermally conductive layer is configured to be inserted between the plurality of battery cells when swelling of the battery cell occurs.

10. The battery module according to claim 8,
wherein the first thermally conductive layer is configured to be in contact with the ends of the battery cells.

11. The battery module according to claim 8,
wherein the first thermally conductive layer is configured to surround the ends of the battery cell.

12. The battery module according to claim 3,
wherein the thermally conductive layer is configured to include a portion in which a thickness of the second thermally conductive layer varies as it gets closer to an outermost portion in a stacking direction of the battery cells.

13. A battery pack comprising a battery module according to any one of claims 1 to 12.

14. A vehicle comprising a battery module according to any one of claims 1 to 12.
